# EUROPEAN PATENT APPLICATION

(11) **EP 2 514 557 A2**
(43) Date of publication of application: **24.10.2012**
(21) Application number: 10837785.4
(22) Date of filing: 16.11.2010
(51) Int. Cl.: B23Q 11/08, B23Q 11/00

(54) **SET-UP STATION DOOR APPARATUS FOR MACHINE TOOL**

(30) Priority: 19.12.2009 KR 20090127581
(71) Applicant: Doosan Infracore Co., Ltd., Dong-gu Incheon 401-020 (KR)
(72) Inventor: PARK, Jin Kook, Changwon-si Gyeongsangnam-do 641-777 (KR)
(74) Representative: Isarpatent
(86) International application number: PCT/KR2010/008085
(87) International publication number: WO 2011/074788

(57) **Abstract**

The present invention relates to a set-up station door apparatus for a machine tool, including: a safety guard (10) protecting a multi-pallet system of a machine tool; a door member (100) that consists of a first door member (110) and a second door member (120) and can move between a first position where a set up station (20) is closed and a second position where the set-up station (20) is opened in a direction that each side of the first door member (110) and the second door member (120) moves away from and close to each other, respectively; a door support member (200) that is disposed at a side of the safety guard (10) adjacent to the door member (100) and guides the movement of the door member (100) by being combined with the door member (100); and a door guide member(300) that is disposed at the door member (100) and guides the movement of the door member (100) by being combined with the door support member (200).

## Description

### [Technical Field]

The present invention relates to a multi-pallet system of a machine tool, and more particularly, to a door structure of a set-up station that sets up a workpiece in a multi-pallet system.

### [Background Art]

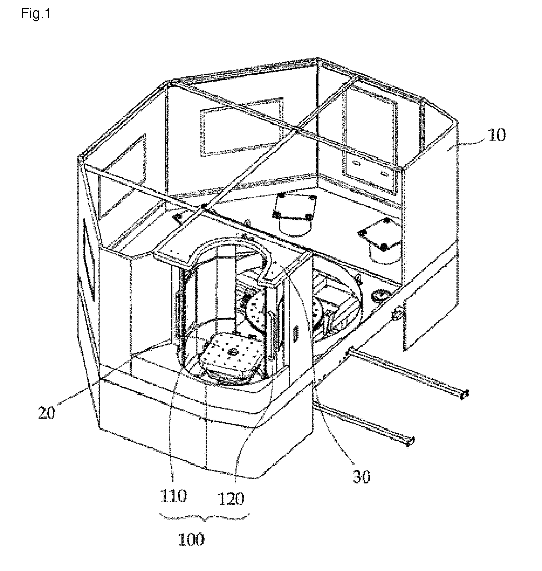

Among machine tools, a so-called MPS (Multi-Pallet System) is an apparatus that is equipped with a plurality of pallets and makes it possible to set and fix a plurality of workpieces on the pallets and sequentially move the pallets to machine the workpieces, as shown in FIG. 1.

Therefore, as the pallets are moved to machining tables for cutting, cutting is performed, and the pallets are repeatedly moved to the machining tables repeatedly change the positions, such that the multi-pallet system is generally surrounded by a safety guard 10 such as a fence for safety of a worker.

Further, it is necessary to set a workpiece onto the pallets to perform a series of cutting, such that a space for setting up a workpiece, which is called set-up station, is provided.

An apparatus that opens/closes the safety guide surrounding the multi-pallet system is needed to ensure the set-up station for setting a workpiece on the pallets and the worker is protected by opening the safety guard when setting the workpiece and closing the safety guard when the workpiece is not set.

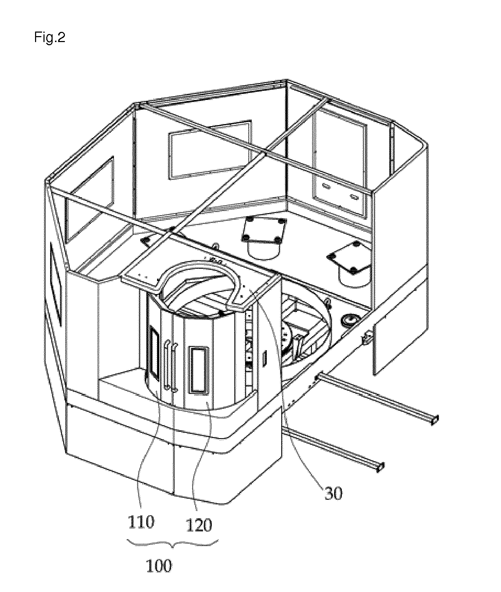

As shown in FIGS. 1 and 2, a set-up station is usually provided with a door member 100 that can be opened/closed in a door type, such that the door protects a multi-pallet system by functioning like a safety guard when being closed, as shown in FIG. 1, and, as shown in FIG. 2, when a door 20 is open, the door 20 ensures the space of a set-up station 20 and protects a worker such that the worker can safely set a workpiece against interference with other pallets in the multi-pallet system or the operation of an APC (Auto Pallet Changer).

In general, the door of a set-p station is provided with a structure that guides and supports opening/closing, at the upper and lower portion to be stably opened/closed, such that the upper portion and the lower portion of the door are structured to be opened/closed along the door support structure provided at the main body of a machine tool or a safety guard.

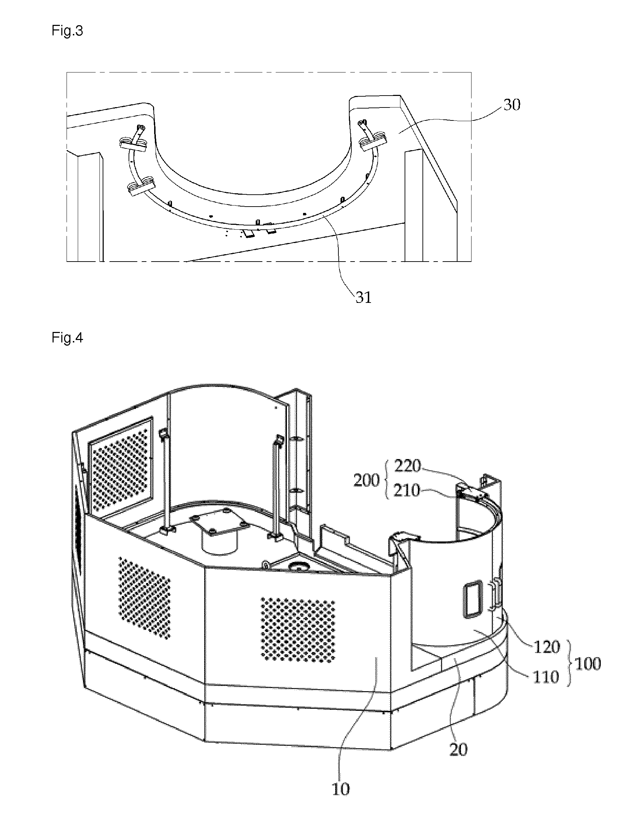

Therefore, it is possible to achieve an upper door support structure 30 provided with a door guide shown in FIG. 3, and the upper door support structure 30 is usually combined with the safety guard 10 and supports a door.

The set-up station requires to have a space larger than the size of a workpiece to machine, because it needs to frequently move the pallets with the workpiece thereon; therefore, it is necessary to set the heights of the left and right safety guards surrounding the set-up station and the upper door support structure 30 in consideration of the size of the workpiece.

In particular, when the upper door support structure 30 is formed like a roof on the safety guard 10 and a door guide like an upper door support rail 31 is provided, it is necessary to install the upper door support structure 30 higher than the height of the workpiece to be set on the set-up station in order to prevent the upper door support structure 30 from interfering with the movement of the workpiece.

Therefore, since the upper door support structure 30 is combined with the safety guard 10 and stably guides the door, the safety guard 10 of the machine tool needs to be formed to have a height corresponding to the position of the upper door support structure 30, and accordingly, the entire height of the safety guard 10 increases, such that the safety guard becomes unnecessarily high and the manufacturing cost increases.

### [Disclosure]

### [Technical Problem]

The present invention has been made in consideration of the facts described above and it is an object to provide a set-up station door apparatus for a machine tool which makes it possible to reduce manufacturing cost without interfering with movement of a workpiece while ensuring stable operation of a set-up station door in a machine tool.

### [Technical Solution]

In order to achieve the object of the present invention, a set-up station door apparatus for a machine tool includes: a safety guard 10 protecting a multi-pallet system of a machine tool; a door member 100 that consists of a first door member 110 and a second door member 120 and can move between a first position where a set up station 20 is closed and a second position where the set-up station 20 is opened in a direction that each side of the first door member 110 and the second door member 120 moves away from and close to each other, respectively; a door support member 200 that is disposed at a side of the safety guard 10 adjacent to the door member 100 and guides the movement of the door member 100 by being combined with the door member 100; and a door guide member 300 that is disposed at the door member 100 and guides the movement of the door member 100 by being combined with the door support member 200.

Further, the door guide member 300 may include a door rail 310 and a door rail-fitting member 320 that fastens the door rail 310 inside the door member 100, and the door support member 200 may include a support roller 210 that fits on the door rail 310 and guides movement of the door rail 310, and a support roller-fastening member 220 that fastens the support roller 210 to the safety guard 10.

### [Advantageous Effects]

As described above, since the door member includes the door guide member that guides the door to open and close in the set-up station door apparatus for a machine tool according to the present invention, it is possible to remove an upper door support structure including the door guide member, such that it is possible to simplify the structure and allow the door to stably operate.

Further, since there is not door upper support structure equipped with a door guide member, it is possible to prevent interference with a workpiece and decrease the height of the safety guard, such that it is possible to reduce the manufacturing cost.

### [Description of the Drawings]

FIG. 1 is a view schematically showing when a door is closed in a set-up station door apparatus for a machine tool of the related art.
FIG. 2 is a view schematically showing when the door is open in the set-up station door apparatus of the machine tool for the related art.
FIG. 3 is a view schematically showing the structure of an upper door support member in the set-up station door apparatus for the machine tool of the related art.
FIG. 4 is a view schematically showing a set-up station door apparatus for a machine tool according to an exemplary embodiment of the present invention.

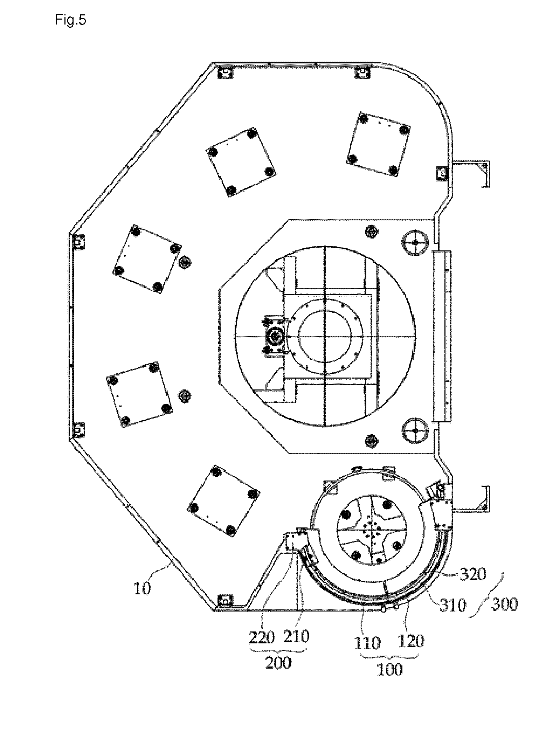

FIG. 5 is a view schematically showing the structure of a door member in the set-up station door apparatus for a machine tool according to an exemplary embodiment of the present invention.
FIG. 6 is a view showing a combination structure of the door member and a door support member in the set-up station door apparatus for a machine tool according to an exemplary embodiment of the present invention.

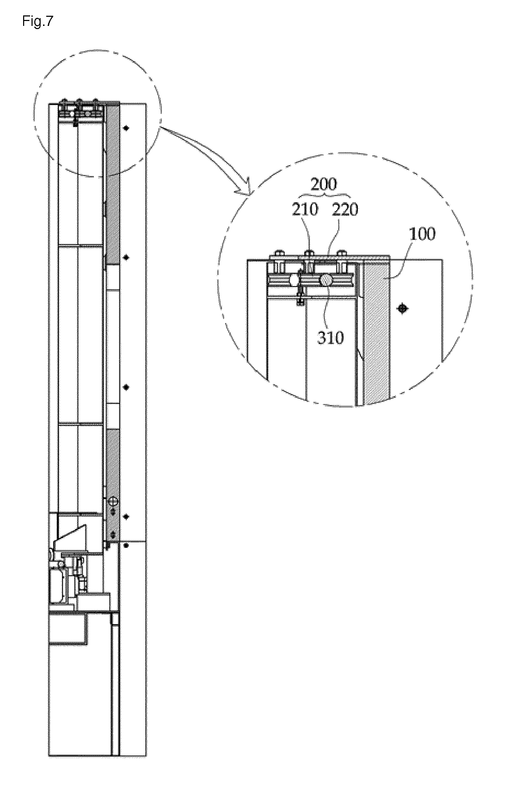

FIG. 7 is a cross-sectional view showing a combination structure of the door member and the door support member in the set-up station door apparatus for a machine tool according to an exemplary embodiment of the present invention.

### [Description of Main Reference Numerals of Drawings]

| | |
|---|---|
| 10: Safety guard | 20: Set-up station |
| 30: Upper door support structure | 31: Upper door support rail |
| 100: Door member | 110: First door member |
| 120: Second door member | 200: Door support member |
| 210: Support roller | 220: Support roller-fastening member |
| 300: Door guide member | 310: Door rail |
| 320: Door rail-fitting member | |

### [Detailed description]

The advantages and features of the present invention, and methods of achieving them will be clear by referring to the embodiments that will be describe hereafter in detail with reference to the accompanying drawings. Hereinafter, a set-up station door apparatus for a machine tool according to an exemplary embodiment of the present invention will be described with reference to the accompanying drawings.

Referring to FIG. 4, the present invention includes: a safety guard 10 protecting a multi-pallet system of a machine tool; a door member 100 that consists of a first door member 110 and a second door member 120 and can move between a first position where a set up station 20 is closed and a second position where the set-up station 20 is opened in a direction that each side of the first door member 110 and the second door member 120 moves away from and close to each other, respectively; a door support member 200 that is disposed at a side of the safety guard 10 adjacent to the door member 100 and guides the movement of the door member 100 by being combined with the door member 100; and a door guide member 300 that is disposed at the door member 100 and guides the movement of the door member 100 by being combined with the door support member 200.

The safety guard 10 generally has a structure surrounding a multi-pallet system (MPS) of a machine tool, like a fence, and the structure is firm to protect the multi-pallet system and keep a worker safe.

The door member 100 consists of the first door member 110 and the second door member 120 which usually made of metal like a door and disposed at the left and right surrounding the set-up station 20, such that the first door member 110 can move left to open and the second door member 120 can move right to open.

The door member opens and closes in a similar structure to those of set-up station door apparatuses of the related art and the door member 100 functions to protect the multi-pallet system of a machine tool including the set-up station, together with the safety guard 10.

Since the door support member 200 requires to support the door member 100 and guide opening and closing by being connected with the door member 100, it is possible to stably support the door member 100 by combining the door support member 200 with a fixed part such as the safety guard 10 surrounding the multi-pallet system.

Therefore, the door support member 200 is disposed at the safety guard 10, which is adjacent to the door member 100, to be close to the door member 100, and is combined with the door member 100 and guides opening and closing.

Since the door member 100 consists of the first door member 110 and the second door member 120, a plurality of door support members 200 may be provided to be disposed respectively at the safety guard 10 adjacent to the first door member 110 and the second door member 120.

The door guide member 300 is disposed at the door member 100 and guides the opening and closing of the door member 100 by being combined with the door support members 200, such that the door guide member 300 is generally provided to fit the opening/closing path of the door member 100.

That is, when the door member 100 formed in a cylindrical arc shaped-curved surface opens and closes along the same arc line the door guide member 300 is formed in the arc shape along the shape of the opening/closing path of the door member 100.

The door guide member 300 and the door support member 200 formed at the door member 100 may be combined in various shapes as long as it can perform the function of guiding the opening and closing of the door member 100, such as when the door support member 200 and the door guide member 300 are combined with each other to form a protrusion, like a sliding door, or when a separate support member is provided.

The door guide member 300 may be generally implemented by a door rail 310 combined with the door member 100 and the door support member 200 may include a support roller 210 fitting in the door rail 310 such that the door member 100 can be smoothly opened/closed by small force.

Therefore, the door guide member 200 may be composed of the door rail 210 and a door rail-fitting member 320, the door member 100 is guided to open and close along the line of the door rail 310, and the door rail 310 is a part that is combined with the door support member 200 to move, such that it is preferable to dispose the door rail 310 inside the door member 100 for the external appearance and safety.

The door support member 300 may include a support roller 310 movably fitting in the door rail 210 and a support roller-fastening member 220 fastening the support roller 210 to a fixed portion such as the safety guard 10.

Therefore, the door support member 200 has a structure that firmly fastens and supports the support roller 210 to the safety guard 10 with the support roller-fastening member 220 and the support roller 210 guides the door member 10 that opens and closes, in contact with the door rail 310 combined with the door member 100.

Conclusively, since the door member 100 is equipped with the door rail 310 guiding the door member 100 that opens and closes, as a part of the door guide member 300 and the door rail 310 fits on the support roller 210 of the door support member 200 supporting the door member 100 such that the door member 100 opens/closes, the door member 100 is supported by the support roller 210 and guided to open and close.

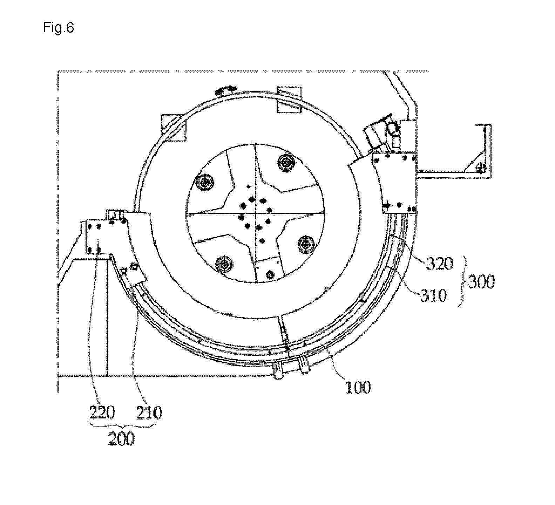

Referring to FIG. 6, which is a cross-sectional view showing a contact structure between the door rail 310 combined with the door member 100 and the support roller 210 of the door support member 200, in a set-up station door apparatus for a machine tool according to an exemplary embodiment of the present invention, and it is possible to understand the combination structure between the door member 100 and the door support member 300 and the opening/closing operation of the door member 100.

The door rail 220 is combined with the door member 100 by a door rail member 230 and the door member 100 has a structure that is guided to move and supported by the support roller 210 through the door rail 310.

Further, the support roller 210 may be implemented by a pair of roller opposite each other with the door rail 310 therebetween and two rollers disposed at both sides of the upper rail are in close contact with each other, such that shaking or vibration to the left and right perpendicular to the longitudinal direction of the door rail 310 can be reduced, thus the door member 100 connected with the door rail 310 can stably operate.

Hereafter, a method of using the set-up station door apparatus for a machine tool according to an exemplary embodiment of the present invention is described in detail.

Referring to FIG. 4, the set-up station door apparatus for a machine tool according to an exemplary embodiment of the present invention closes the door member 100 but the pallets included in the multi-pallet system repeat moving to the machining table while the multi-pallet system operates, such that it is possible to sequentially machine a plurality of workpieces.

Therefore, when the door member 100 is closed, the door member 100 surrounds the multi-pallet system including the set-up station 20, together with the safety guard 10, such that the operation of the multi-pallet system for a machine tool is protected and the worker is not injured.

Further, the worker can work by opening the set-up station 20 by opening the door member 100 and positioning the pallet for setting up a workpiece onto the set-up station 20, in order to set up a workpiece onto the pallet of the multi-pallet system for a machine tool.

Therefore, the worker can access the space of the set-up station 20 from the outside of the multi-pallet system for a machine tool, such that the worker can set up a workpiece onto the pallets of the set-up station 20 in person or by using a crane, and the door member 100 surround the multi-pallet system while ensuring a space inside the multi-pallet system when the door member 100 is open, such that the door member protects the space of the set-up station 20 where setting-up is performed.

Further, since there is not provided an upper door support structure, unlike the set-up station door apparatus of the related art shown in FIGS. 1 and 2, there is no interference in the set-up station 20, such that it is possible to conveniently carry a workpiece and reduce the possibility of break.

Further, as it is possible to remove an upper door support structure in the set-up station door apparatus for a machine tool according to an exemplary embodiment of the present invention, as compared with the set-up station door apparatus of the related art, there is an effect of decreasing the height of the safety guard 10 formed adjacent to the set-up station, and thus it is possible to prevent an unnecessary increase in manufacturing cost.

Although an exemplary embodiment of the present invention was described above with reference to the accompanying drawings, those skilled in the art would understand that the present invention may be implemented in various ways without changing the necessary features or the spirit of the prevent invention.

Therefore, it should be understood that the embodiment described above is not limitative, but only an example in all respects, the scope of the present invention is expressed by claims described below, not the detailed description, and it should be construed that all of changes and modifications achieved from the meanings and scope of claims and equivalent concept are included in the scope of the present invention.

### [Industrial Applicability]

The present invention can be applied to a set-up station where a workpiece is set up, in a machine tool equipped with a multi-pallet system.

## Claims

1. A set-up station door apparatus for a machine tool, comprising:
a safety guard (10) protecting a multi-pallet system of a machine tool;
a door member (100) that consists of a first door member (110) and a second door member (120) and can move between a first position where a set up station (20) is closed and a second position where the set-up station (20) is opened in a direction that each side of the first door member (110) and the second door member (120) moves away from and close to each other, respectively;
a door support member (200) that is disposed at a side of the safety guard (10) adjacent to the door member (100) and guides the movement of the door member (100) by being combined with the door member (100); and
a door guide member(300) that is disposed at the door member (100) and guides the movement of the door member (100) by being combined with the door support member (200).

2. The set-up station door apparatus for a machine tool of claim 1,wherein the door guide member (300) includes a door rail (310) and a door rail-fitting member (320) that fastens the door rail (310) inside the door member (100), and
the door support member (200) includes a support roller (210) that fits on the door rail (310) and guides movement of the door rail (310), and a support roller-fastening member (220) that fastens the support roller (210) to the safety guard (100).
